# EUROPEAN PATENT SPECIFICATION

(11) **EP 2 300 535 B1**
(45) Date of publication and mention of the grant of the patent: **03.04.2013**
(21) Application number: 09795150.3
(22) Date of filing: 09.07.2009
(51) Int. Cl.: C08L 33/08, C08K 3/36, C08K 9/04, C08L 5/12, B29C 45/00

(54) **COMPOSITIONS WITH IMPROVED SEALING CHARACTERISTICS FOR MOLD-IN-PLACE GASKETS**
ZUSAMMENSETZUNGEN MIT VERBESSERTEN DICHTUNGSEIGENSCHAFTEN FÜR IN SITU GEFORMTE DICHTUNGEN
COMPOSITIONS AVEC DES CARACTÉRISTIQUES D'ÉTANCHÉITÉ AMÉLIORÉES POUR DES JOINTS D'ÉTANCHÉITÉ MOULÉS EN PLACE

(30) Priority: 11.07.2008 US 79829 P
(43) Date of publication of application: 30.03.2011
(73) Proprietor: Henkel Corporation, Rocky Hill, CT 06067 (US)
(72) Inventor: DECATO, Alfred, A., Waterbury CT 06708 (US); LIONBERGER, James, E., East Hampton CT 06424 (US)
(74) Representative: Waloch, Christoph Andreas
(86) International application number: PCT/US2009/049996
(87) International publication number: WO 2010/006093

(56) References cited:
- EP-A1- 0 505 737
- WO-A1-03/052011
- WO-A1-2006/086324
- US-A1- 2005 136 252
- US-A1- 2006 128 853
- US-B1- 6 780 897
- BELL; NELSON S. ET AL.: 'Photophysical Effects between Spirobenzopyran- Methyl methacrylate-Functionalized Colloidal Particles' LANGMUIR. vol. 22, no. 4, pages 1420 - 1427, XP008140997
- PARVOLE; J. ET AL.: 'Formation of polyacrylate brushes on silica surfaces' POLYMER INTERNATIONAL. vol. 51, 2002, pages 1111 - 1116, XP008141016

## Description

### BACKGROUND OF THE INVENTION

### Field Of The Invention

The present invention relates to compositions with improved sealing characteristics for mold-in-place gaskets, and a process for forming a mold-in-place gasket by liquid injection molding. More particularly, the present invention relates to a mold-in-place gasket polyacrylate composition incorporating (meth)acrylate-functionalized silica, plasticizers, and a photoinitiator, with improved modulus and sealing properties, and a process for forming such mold-in-place gasket.

### Brief Description Of Related Technology

Heretofore, mold-in-place gaskets have been formed by liquid injection of a gasket-forming material into a mold. Typical processes include the use of high temperature and/or high pressure liquid injection. For example, a typical process is described in U.S. Patent No. 5,597,523 to Sakai et al. The molding process and molding device requires use of both an elevated pressure of 24,500 kPa (3,500 psig) and an elevated temperature of 250°C (480°F). Upper and lower molds are mated to define a mold cavity therebetween. Liquid gasket material, such as epoxy resin or plastic rubber, is pumped into a mold cavity at 2,900 kPa (430 psig). The molds (with the gasket material disposed within the cavity) are clamped together at an elevated pressure of 24,500 kPa (3,500 psig) and heated to about 250°C (480°F). After the gasket material is cured, the molds and the gasket are cooled to room temperature. The use of such elevated pressures and temperatures at such short cycle times, however, typically require the use of metallic molds that can withstand such large fluctuations in pressure and temperature while maintaining close tolerances to form the gasket, which make the apparatus and the process expensive and difficult to operate.

Useful mold-in-place gaskets desirably have a high modulus, sealing force and tensile strength, while maintaining an acceptable compressibility. Generally, techniques to improve the modulus, sealing force and/or tensile strength have resulted in an undesirable lowering of the compressibility or other physical properties.

There is currently a need for a composition for forming gaskets by mold-in-place methods, which composition shows improved compression properties for high modulus compositions and higher sealing force without comprising compression properties. Further, there is a need for a method for forming such gaskets, which gaskets are able to maintain an effective sealing force at lower temperatures. There is also a need for actinic radiation curable compositions and methods useful to form such improved gaskets.

### SUMMARY OF THE INVENTION

In one aspect of the invention, there is provided an actinic radiation curable composition with improved compressibility, which includes a polyacrylate; (meth)acrylate-functionalized silica; a photoinitiator; and a plasticizer.

In another aspect of the invention, there is provided a method for producing a mold-in-place gasket, which method includes the steps of: providing an actinic radiation curable composition with improved compressibility, the composition including a polyacrylate; (meth)acrylate-functionalized silica; and a photoinitiator; providing an injection mold defining an enclosed gasket-forming cavity and an injection port communicating with the cavity, the mold further including an actinic radiation conducting means for permitting radiation transmission therethrough; injecting the composition into the mold to at least partially fill the cavity; and transmitting actinic radiation through the actinic radiation conducting means in a sufficient amount to cure the composition in the mold to form a gasket in the gasket-forming cavity.

### DETAILED DESCRIPTION OF THE INVENTION

The compositions of the present invention may be used in various molds useful for forming mold-in-place gaskets. Any traditional mold may be used. Traditional molds include an upper mold member and a lower mold member, designed to fit in communication with each other and forming a mold cavity, and an injection port in fluid communication with the mold cavity. The cavity may be any shape or size desired. Desirably, at least one of the mold members transmits actinic radiation therethrough. The liquid gasket-forming composition may be introduced into the mold cavity via the injection port. Once injected, the composition is allowed to cure, forming the gasket. In a desired aspect, cure may be aided by exposure to actinic radiation. In this aspect, a source of actinic radiation is provided, which is transmitted through the mold cavity to the composition.

Useful actinic radiation in connection with the present invention includes ultraviolet light, visible light, and combinations thereof. As used herein, "actinic radiation" means electromagnetic radiation having a wavelength of from about 200 nm to about 10,000 nm and desirably about 200 nm to about 1,000 nm, which is capable, directly or indirectly, of curing the specified resin component of the resin composition. By indirect curing in this context is meant curing under such electromagnetic radiation conditions, as initiated, promoted, or otherwise mediated by another compound. Useful ultraviolet light (UV) includes, but is not limited to, UVA (about 320 nm to about 410 nm), UVB (about 290 nm to about 320 nm), UVC (about 220 nm to about 290 nm) and combinations thereof. Useful visible light includes, but is not limited to, blue light, green light, and combinations thereof. Such useful visible lights have a wavelength from about 450 nm to about 550 nm.

The radiation generated from source is transmittable to the mold cavity (in which the gasket-forming composition is located) when the mold members are disposed in a substantial abutting relationship. The way in which actinic radiation is transmitted to the cavity may comprise the use of an actinic radiation transmissible member, whereby the actinic radiation may be transmitted directly through the member. The actinic radiation transmissible member may be either or both of the mold members, or a portion of either mold member. Further, the transmissible member may be one or more channels in the mold member(s) through which the actinic radiation may travel to the mold cavity. The transmissible member or a portion of the transmissible member may be made from a transmissible thermoplastic material, such as polycarbonate acrylate, silicone, polyisobutylene or other transmissible polymeric members, and/or may include pathways, such as conduits or fiber optic cables, through which the actinic radiation is transmissible or passable.

A removable plastic liner may also be provided, which is abuttingly disposed to the mating surface of the actinic radiation transmissible member. Here, the plastic liner should include an actinic radiation transmissible material.

In another aspect of the present, one of the mold members forming the gasket-shaped cavity may be itself an article of manufacture or a part of an article of manufacture, such as an portion of a vehicle, for example a valve cover. The compositions of the present invention may be formed directly on such an article of manufacture or a part thereof by the methods of the present invention. Thus, upon curing the gasket-forming compositions of the present invention and removing the actinic radiation-conducting-mold member, the article or part is produced with an integral gasket, which eliminates the need for mechanically and/or chemically attaching a separately formed gasket.

The present invention provides an actinic radiation curable composition, useful for forming mold-in-place gaskets. The mold-in-place gaskets of the present invention exhibit improved tensile modulus and sealing force under compression, while maintaining a sufficient compression level.

Useful materials to form gaskets for the actinic radiation curable composition include actinic radiation curable siloxanes, polyacrylates, polyurethanes, polyethers, polyolefins, polyesters, copolymers thereof and combinations thereof.

Desirably, the curable, gasket-forming composition includes at least one monomer. Desirably, the monomers used in the present invention are (meth)acrylate monomers. Such monomers are desirably characterized as being either flexible or rigid. It will be apparent to one of ordinary skill in the art that the choice of monomers is dependent on the desired properties of the resultant sealant product. Within the (meth)acrylate component are a wide variety of materials represented by H₂CCGCO ₂R, where G may be hydrogen, halogen or alkyl of 1 to about 4 carbon atoms, and R may be selected from alkyl, cycloalkyl, alkenyl, cycloalkenyl, alkaryl, aralkyl or aryl groups of 1 to about 16 carbon atoms, any of which may be optionally substituted or interrupted as the case may be with silane, silicon, oxygen, halogen, carbonyl, hydroxyl, ester, carboxylic acid, urea, urethane, carbamate, amine, amide, sulfur, sulfonate, sulfone and the like.

More specific (meth)acrylate monomers particularly desirable for use herein include polyethylene glycol di(meth)acrylates, desirably triethyleneglycol di(meth)acrylate, hydroxypropyl (meth)acrylate, bisphenol-A di(meth)acrylates, such as ethoxylated bisphenol-A (meth)acrylate ("EBIPA" or "EBIPMA"), and tetrahydrofuran (meth)acrylates and di(meth)acrylates, citronellyl acrylate and citronellyl methacrylate, hexanediol di(meth)acrylate ("HDDA" or "HDDMA"), trimethylol propane tri(meth)acrylate, tetrahydrodicyclopentadienyl (meth)acrylate, ethoxylated trimethylol propane triacrylate ("ETTA"), triethylene glycol diacrylate and triethylene glycol dimethacrylate ("TRIEGMA").

For purposes of illustration only, listed herein are examples of urethane-acrylate monomers suitable for use in the present invention. However, it is to be understood that any acrylate resin, including non-urethane acrylates and methacrylates may be used in the present invention. Desirably, monomers used in the present invention are polyurethane polyacrylate monomers. Examples of such monomers are described in United States Patent No. 3,425,988 to Gorman et al., specifically incorporated by reference herein. These monomers may be represented by the following general formula: 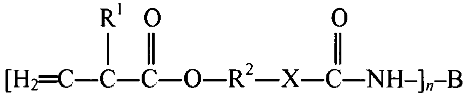 where B may be a polyvalent organic radical selected from the group consisting of alkyl, alkenyl, cycloalkyl, aryl, aralkyl, alkaryl and heterocyclic radicals both substituted and unsubstituted; X may be selected from the group consisting of O and 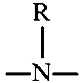 radicals; *n* may be an integer from 2 to 6 inclusive; R¹ may be a member selected from the class consisting of hydrogen, chlorine and methyl and ethyl radicals; and R² may be a divalent organic radical selected from the group consisting of lower alkylene of 1 to 8 carbon atoms, phenylene and naphthalene radicals.

Additional urethane-acrylate-capped poly(alkylene) ether polyol monomers, such as those described in U.S. Patent No. 4,018,851 to Baccei, specifically incorporated by reference herein, may be used in the present invention. Further, urethane-acrylate-capped polybutadiene-based monomers, such as those described in U.S. Patent No. 4,295,909, to Baccei, specifically incorporated by reference herein, may be used in the present invention.

Additional monomers useful in the present invention include the alkylene glycol diacrylates having the general formula: 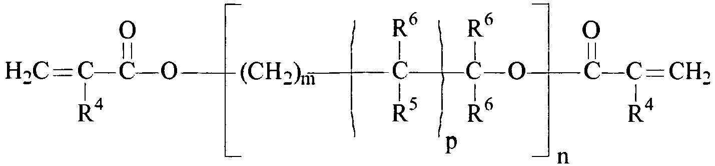 where R⁶ represents a radical selected from hydrogen, lower alkyl of 1-4 carbon atoms, inclusive, hydroxyalkyl of 1-4 carbon atoms inclusive, and 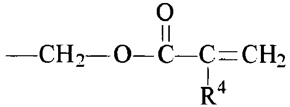 where R⁴ may be a radical selected from hydrogen, halogen, and lower alkyl of 1-4 carbon atoms; R⁵ may be a radical selected from hydrogen or -OH and 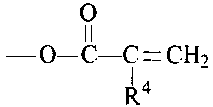 where m may be an integer equal to at least 1, desirably 1-8 and more desirably from 1 to 4; n may be an integer equal to at least 1, desirably 1 to 20; and p may be 0 or 1.

Additional monomers useful in the present invention include mono-, di-, tri- tetra- and polyethylene glycol dimethacrylate and the corresponding diacrylates; di(pentamethylene glycol) dimethacrylate; tetraethylene glycol di(chloroacrylate); diglycerol diacrylate; diglycerol tetramethacrylate; butylene glycol dimethacrylate; neopentyl glycol diacrylate; and trimethylopropane triacrylate.

Useful polymerizable crosslinkable components are ethoxylated trimethylolpropane triacrylate, trimethylol propane trimethacrylate, dipentaerythritol monohydroxypentacrylate, pentaerythritol triacrylate, ethoxylated trimethylolpropane triacrylate, 1,6-hexanedioldiacrylate, neopentyl glycoldiacrylate, pentaerythritol tetraacrylate, 1,2-butylene glycoldiacrylate, trimethylopropane ethoxylate tri(meth)acrylate, glyceryl propoxylate tri(meth)acrylate, trimethylolpropane tri(meth)acrylate, dipentaerythritol monohydroxy penta(meth)acrylate, tri(propylene glycol) di(meth)acrylate, neopentylglycol propoxylate di(meth)acrylate, 1,4-butanediol di(meth)acrylate, polyethyleneglycol di(meth)acrylate, triethyleneglycol di(meth)acrylate, butylene glycol di(meth)acrylate, ethoxylated bisphenol A di(meth)acrylate and combinations thereof. Other useful monomers include those acrylates derived from bisphenol-A, such as bisphenol-A dimethacrylate, hydrogenated bisphenol-A dimethacrylate, and ethoxylated bisphenol-A di(meth)acrylate.

Desirably, the gasket-forming composition includes a polyacrylate. Such polyacrylates generally include 1,3-butylene glycol diacrylate, diethylene glycol diacrylate, 1,6-hexanediol diacrylate, neopentylglycol diacrylate, polyethylene glycol diacrylate, tetraethylene glycol diacrylate, methylene glycol diacrylate, pentaerythritol tetraacrylate, tripropylene glycol diacrylate, ethoxylated bisphenol-A-diacrylate, trimethylolpropane triacrylate, di-trimethylolopropane tetraacrylate, dipenterythritol pentaacrylate, pentaerythritol triacrylate and the corresponding methacrylate compounds. Particularly desirable polyacrylates include an acrylate terminated telechelic polyacrylate. Also useful are reaction products of (meth)acrylic acid and epoxide resins, and urethane resins. Suitable poly(meth)acrylic ester compounds are also described in U.S. Patent Nos. 4,051,195, 2,895,950, 3,218,305, and 3,425,988.

While di- and other polyacrylate esters have been found particularly desirable, monofunctional acrylate esters (esters containing one acrylate group) also may be used. When dealing with monofunctional acrylate esters, it may be desirable to use an ester which has a relatively polar alcoholic moiety. Such materials are less volatile than low molecular weight alkyl esters and, more importantly, the polar group tends to provide intermolecular attraction during and after cure, thus producing more desirable cure properties, as well as a more durable sealant or adhesive. Particularly desirable are the polar groups selected from labile hydrogen, heterocyclic ring, hydroxy, amino, cyano, and halogen polar groups. Useful examples of compounds within this category include cyclohexyl methacrylate, tetrahydrofurfuryl methacrylate, hydroxyethyl acrylate, hydroxypropyl methacrylate, t-butylaminoethyl methacrylate, cyanoethylacrylate, and chloroethyl methacrylate. The materials are often incorporated as reactive diluents which are capable of copolymerizing with the various other polymerizable materials.

The acrylate terminated telechelic polyacrylate may desirably have a molecular weight from about 1,000 to about 100,000, more desirably from about 3,000 to about 40,000. Desirably, the acrylate terminated telechelic polyacrylate has a viscosity of about 10 Pas (10,000 cPs) to about 120 Pas (120,000 cPs). Additionally, the monomer desirably has a specific gravity of from about 1.0 to about 1.30. Particularly desirable acrylate terminated telechelic polyacrylates are commercially available from Kaneka Corporation, Japan, such as under the trade designations RC220C, RC210C, RC200C, RC100C, XX013C and XX039C. It is believed that the RC220C, RC210C, RC200C and XX013C are each terpolymers of combinations of substituted and unsubstituted alkylacrylates, such as ethyl acrylate, 2-methoxyethyl acrylate and n-butyl acrylate (varying by molecular weight), whereas the RC100C is a homopolymer of n-butyl acrylate.

The composition of the present invention also includes a (meth)acrylate-functionalized silica. In many instances, such a (meth)acrylate-functionalized silica may be referred to as an active fumed silica (which is sometimes referred to as "functional" fumed silica). Also, (meth)acrylate-functionalized silica may embrace active or "functional" precipitated silica. It has been found that the use of active fumed silica improves the physical characteristics of the gasket once formed. These improvements are more fully demonstrated in the Examples below. As used herein, (meth)acrylate-functionalized silica refers to silica that has been rendered chemically active and desirably functions as a solid crosslinker. Thus, the (meth)acrylate-functionalized silica may be active fumed or precipitated silica, desirably active fumed silica. Most desirably, the active fumed silica may be a methacrylsilane treated silica, which functions as a crosslinker. Useful (meth)acrylate-functionalized silicas include 2-propenoic acid, 2-methyl, 3-(trimethoxysilyl) propylester, reaction products with silica. Suitable active fumed silicas are commercially available from, for example, Evonik Industries, and sold under the trade name Aerosil. Such active fumed silicas include those available under the trade designation R7200, which is a structure modified and methacrylsilane after-treated fumed silica having a high specific surface area ("BET") of 150 m²/g. Wacker also has offered for sale commercially an active fumed silica under the trade designation HDK H30RY, which has a BET of 200 m²/g.

Other fillers, including fumed silica fillers, such as conventional (i.e., non-activated) hydrophobic fumed silica may additionally be included in the gasket-forming composition. Such fumed silicas may be treated with materials such as hexamethyldisilazane, trimethoxyoctylsilane and polydimethylsiloxane, which provides additional hydrophobicity but little to no reactive functionality. For example, traditional hydrophobic fumed silica may be used, such as those commercially available from Evonik Industries and sold under the trade name Aerosil, from Cabot Corporation and sold under the tradename CABOSIL or from Wacker and sold under the tradename HDK-2000.

The gasket-forming compositions may further include a plasticizer. It has been found that the use of plasticizers in the gasket-forming compositions improves the physical characteristics of the formed gasket. Plasticizers have been found to not only increase the elongation of the product, but further have the effect of depressing the glass transition temperature (Tg) of the product. Having a lower Tg results in the product having a higher amount of sealing force at lower temperatures. With the inclusion of the plasticizer, the product has a sufficient sealing force at temperatures as low as about -20°C to about -30°C. The improved characteristics are more fully demonstrated in the Examples set forth below.

Suitable plasticizers include those plasticizers commonly known in the art, including but not limited to monomeric and dimeric plasticizers. One desirable plasticizer is di(butoxyethoxyethoxyethyl) glutarate, which is commercially available from HallStar and sold under the trade name Plasthall DBEEEG. Another plasticizer is one commercially available from HallStar sold under trade name TegMer 809. Other traditional plasticizers are suitable for the gasket-forming compositions described herein.

Desirably, the gasket-forming composition includes a photoinitiator. A number of photoinitiators may be employed herein to provide the benefits and advantages of the present invention to which reference is made above. Photoinitiators enhance the rapidity of the curing process when the photocurable compositions as a whole are exposed to electromagnetic radiation, such as actinic radiation. Desirably, the photoinitiator may be a non-peroxide photoinitiator, and most desirably may be a blend of propanone and phosphine oxide, however other photoinitiators may suitably be used. A photoinitiator may be added to the composition in an amount effective to respond to the actinic radiation and to initiate and induce curing of the associated components, via substantial polymerization thereof.

Suitable photoinitiators useful with ultraviolet (UV) actinic radiation curing mono- and polyolefinic monomers include free radical generating UV initiators such as substituted benzophenones and substituted acetophenones, benzoin and its alkyl esters and xanthone and substituted xanthones. Preferred photoinitiators include diethoxy-acetophenone, benzoin methyl ether, benzoin ethyl ether, benzoin isopropyl ether, diethoxyxanthone, chloro-thio-xanthone, azo-bisisobutyronitrile, N-methyl diethanol-amine-benzophenone and mixtures thereof. Particular examples of suitable photoinitiators for use herein include, but are not limited to, photoinitiators available commercially from Ciba Specialty Chemicals, under the "IRGACURE" and "DAROCUR" trade names, specifically IRGACURE 184 (1-hydroxycyclohexyl phenyl ketone), 907 (2-methyl-1-[4-(methylthio)phenyl]-2-morpholino propan-1-one), 369 (2-benzyl-2-N,N-dimethylamino-1-(4-morpholinophenyl)-1-butanone), 500 (the combination of 1-hydroxy cyclohexyl phenyl ketone and benzophenone), 651 (2,2-dimethoxy-2-phenyl acetophenone), 1700 (the combination of bis(2,6-dimethoxybenzoyl-2,4,4-trimethyl pentyl) phosphine oxide and 2-hydroxy-2-methyl-1-phenyl-propan-1-one), 819 [bis(2,4,6-trimethyl benzoyl) phenyl phosphine oxide], 2022 [IRGACURE 819 dissolved in DAROCUR 1173 (described below)] and DAROCUR 1173 (2-hydroxy-2-methyl-1-phenyl-1-propan-1-one) and 4265 (the combination of 2,4,6-trimethylbenzoyldiphenyl-phosphine oxide and 2-hydroxy-2-methyl-1-phenyl-propan-1-one); and the visible light [blue] photoinitiators, dl-camphorquinone and IRGACURE 784DC. Of course, combinations of these materials may also be employed herein.

Other photoinitiators useful herein include alkyl pyruvates, such as methyl, ethyl, propyl, and butyl pyruvates, and aryl pyruvates, such as phenyl, benzyl, and appropriately substituted derivatives thereof. Photoinitiators particularly well-suited for use herein include ultraviolet photoinitiators, such as 2,2-dimethoxy-2-phenyl acetophenone (e.g., IRGACURE 651), and 2-hydroxy-2-methyl-1-phenyl-1-propane (e.g., DAROCUR 1173), bis(2,4,6-trimethyl benzoyl) phenyl phosphine oxide (e.g., IRGACURE 819 and IRGACURE 2022), and the ultraviolet/visible photoinitiator combination of bis(2,6-dimethoxybenzoyl-2,4,4-trimethylpentyl) phosphine oxide and 2-hydroxy-2-methyl-1-phenyl-propan-1-one (e.g., IRGACURE 1700), as well as the visible photoinitiator bis(η⁵-2,4-cyclopentadien-1-yl)-bis[2,6-difluoro-3-(1H-pyrrol-1-yl)phenyl]titanium (e.g., IRGACURE 784DC).

In addition to the above-described composition, the composition may further include a (meth)acryloyl-terminated compound having at least two (meth)acryloyl pendant groups selected from (meth)acryloyl-terminated polyethers, meth)acryloyl-terminated polyolefins, (meth)acryloyl-terminated polyurethanes, (meth)acryloyl-terminated polyesters, (meth)acryloyl-terminated silicones, copolymers thereof, and combinations thereof. Details of such (meth)acryloyl-terminated materials may be found in European Patent Application No. EP 1 059 308 A1 to Nakagawa et al., and may be commercially available from Kaneka Corporation, Japan.

The compositions may further include reactive diluents, rubber toughening agents, antioxidants and/or mold release agents.

As the reactive diluent, the composition may include a monofunctional (meth)acrylate. Useful monofunctional (meth)acrylates may be embraced by the general structure CH₂=C(R)COOR² where R is H, CH₃, C₂H₅ or halogen, such as Cl, and R² is C₁₋₈ mono- or bicycloalkyl, a 3 to 8-membered heterocyclic radial with a maximum of two oxygen atoms in the heterocycle, H, alkyl, hydroxyalkyl or aminoalkyl where the alkyl portion is C₁₋₈ straight or branched carbon atom chain. Among the specific monofunctional (meth)acrylate monomers particularly desirable, and which correspond to certain of the structures above, are hydroxypropyl (meth)acrylate, 2-hydroxyethyl (meth)acrylate, methyl (meth)acrylate, tetrahydrofurfuryl (meth)acrylate, cyclohexyl (meth)acrylate, 2-aminopropyl (meth)acrylate, isobornyl (meth)acrylate, isodecyl (meth)acrylate, and 2-ethyl hexyl (meth)acrylate.

In addition, N,N-dimethyl acrylamide ("DMAA") acrylic acid, and -carboxyethyl acrylate (such as is available commercially from Rhodia under the tradename SIPOMER) are usefully employed in the practice of the present invention.

Commercially available representative examples of such reactive diluents include those used in the samples below. More specifically, SARTOMER SR395 (isodecyl acrylate, commercially available from Sartomer Company, Inc., Exton, PA), SARTOMER SR495 (caprolactone acrylate, commercially available from Sartomer), SARTOMER SR531 (cyclic trimethylolpropane formal acrylate, commercially available from Sartomer), and SARTOMER PRO6622 (3,3,5 trimethylcyclohexyl acrylate, commercially available from Sartomer) are each appropriate choices, either alone or in combination with each other or with the other noted reactive diluents.

The compositions may also include rubber toughening agents, such as those used in the samples below. More specifically, commercially available ones include VAMAC DP (an ethylene acrylic dipolymer elastomer available commercially from DuPont), HYCAR VTBN (methacrylate-functional acrylonitrile-butadiene-copolymers commercially available from Hanse Chemie), HYPALON 20 (commercially available from DuPont, and reported to be greater than 96% chlorosulfonated polyethylene, less than 0.4% carbon tetrachloride, less than 0.04% chloroform and less than 2% talc), NEOPRENE AD-10 (commercially available from DuPont, and reported to be greater than 98% 2chloro-1,3-butadiene polymers and copolymers, less than 1% water and less than 1% talc), NIPOL IR2200L (commercially available from Zeon, and reported to be greater than 99% polyisoprene polymer), RICACRYL 3100 (commercially available from Sartomer and reported to be a methacrylated polybutadiene low-functional UV-curable resin), and combinations thereof.

As an antioxidant, the composition may desirably include phenolic and/or phosphite antioxidants, including those available commercially from Ciba Specialty Chemicals under the tradename IRGANOX, representations of which are seen in the several examples in the samples below. Other antioxidants are suitable in the present gasket-forming compositions.

As a mold release agent, the composition may include those available commercially for instance from Crompton Corporation under the tradename MOLD-PRO 678 (a powdered stearic acid).

Optionally, or alternatively, a mold release agent may be applied to the mold cavity prior to the introduction of the liquid gasket-forming composition. The release agent, if needed, helps in the easy removal of the cured gasket from the mold cavity. Useful mold release compositions include, but are not limited, to dry sprays such as polytetrafluoroethylene, and spray- on-oils or wipe-on-oils such as silicone or organic oils. Useful mold release compositions include, but are not limited, to compositions including C₆ to C₁₄ perfluoroalkyl compounds terminally substituted on at least one end with an organic hydrophilic group, such as betaine, hydroxyl, carboxyl, ammonium salt groups and combinations thereof, which is chemically and/or physically reactive with a metal surface. A variety of mold releases are available, such as those marketed under Henkel's FREKOTE brand. Additionally, the release agent may be a thermoplastic film, which can be formed in the mold shape.

Desirably, the polyacrylate may be present in an amount of from about 40 percent to about 75 percent by weight of the composition, and desirably from about 50 to about 70 percent by weight.

Desirably, the (meth)acrylate-functionalized silica may be present in an amount of from about 5 percent to about 30 percent by weight of the composition, and desirably may be present in an amount of about 10 percent to about 20 percent by weight. Other fillers, such as hydrophobic fumed silica may be present in an amount from about 0.1 percent to about 20 percent, and most desirably from about 2 percent to about 5 percent by weight.

In a desired embodiment, the compositions include a combination of both (meth)acrylate-functionalized silica and non-active fumed silica. Desirably, non-active or traditional fumed silica may be present in an amount less than (meth)acrylate-functionalized silica, but any ratio of (meth)acrylate-functionalized silica to non-active fumed silica may be used. The ratio of (meth)acrylate-functionalized silica to non-active fumed silica is from 3:1 to 1:3, though desirably it is about 2:1.

When used, the plasticizer may be present in an amount of from about 5 percent to about 20 percent by weight of the composition, such as about 10 percent to about 15 percent by weight.

The photoinitiator may be desirably present in an amount of from about 0.5 percent to about 5 percent by weight of the composition, such as about 1 percent to about 2 percent by weight.

When present, the reactive diluent may be desirably used in the range of 0.5 to about 50 percent by weight, such as about 5 to about 30 percent by weight, and desirably in the range of from about 10 percent to about 20 percent by weight.

When present, the rubber toughening agent may be desirably used in the range of about 0.5 to about 30 percent by weight, such as about 2.5 to about 10 percent by weight.

When present, the antioxidants may be desirably used in an amount of from about 0.1 percent to about 5 percent, such as about 0.3 to about 1 percent by weight.

The formed gasket of the present invention desirably has an improved modulus and level of elongation, while maintaining a sufficient compressibility. It has been found that the combination of active fumed silica and non-active fumed silica as described herein provides adequate strength while maintaining a desired compression set. Desirably, the formed gasket has a tensile modulus at 100% elongation of from about 300 psi to about 500 psi, and more specifically from about 300 psi to about 450 psi. Additionally, the formed gasket of the present invention desirably has an improved initial sealing force (measured with a Dyneon CSR fixture at 25% compression), desirably from about 60 N to about 150 N. While the physical characteristics of tensile modulus and initial sealing force are improved, the formed gasket of the present invention desirably maintains a low compression set. Most desirably, the formed gasket has a compression set (70 hours @ 150°C) of below about 35%, and desirably from about 5% to about 25%.

The present invention additionally provides a method of forming a gasket by liquid injection. In one aspect, there is provided an actinic radiation curable composition, which includes a polyacrylate, a (meth)acrylate-functionalized silica and a photoinitiator. As described above, other additional components, including a reactive diluent, toughening agent, antioxidant, plasticizer and mold release agent may be included. There is further provided an injection mold, such as those described above. The mold may include one or more than one separate pieces which may be placed in communication with each other to define an enclosed gasket-forming cavity. Further, the mold desirably includes at least one injection port communicating with the cavity for injection of the gasket-forming composition. The injection mold further has a means for permitting actinic radiation through to the cavity, as described above.

Once the composition and the injection mold are provided, the gasket-forming composition may be injected into the gasket-forming cavity through the injection port to at least partially fill the cavity. The cavity may be completely filled or may be filled to any desired level. Once the composition has been injected, actinic radiation may be transmitted through the actinic radiation conducting means in a sufficient amount to cure the composition in the mold to form a gasket in the gasket-forming cavity. Once the composition is cured, the gasket may be removed from the cavity. The method is desirably performed at approximately room temperature, but may be performed at any desired temperatures.

In one aspect of the present invention, the step of transmitting actinic radiation may be capable of varying the level of radiation during use. The amount of actinic radiation transmitted through the transmissible member and onto said injected gasket-forming composition may be detected and monitored. The amount of actinic radiation transmitted onto the gasket-forming composition may be increased when the actinic radiation level declines to a preset minimum or may be decreased if the actinic radiation level is too high. The mating surface of the transmissible member may be simply cleaned when the radiation level declines to the preset minimum to increase actinic radiation transmittance therethrough. Alternatively, the amount of actinic radiation may be controlled by providing the mating surface of the transmissible member with a first removable liner; removing the first removable liner when the radiation level declines to the preset minimum; and providing a second removable liner at the mating surface of the transmissible member to increase actinic radiation transmittance therethrough.

### EXAMPLES

The examples set forth below provide various samples in which different components are evaluated.

### Example 1 -- Hither Levels of Active Fumed Silica

In Table 1 below, two samples have been formulated. Composition A is a formulation that includes a higher level of active fumed silica and a lower level of traditional fumed silica, while Composition B includes a lower amount of active fumed silica and a higher level of traditional fumed silica. The compositions were formed and mold-injected.

**Table 1 -- Composition Formulations**

| **Component** | **Sample/Amt. (wt%)** | |
|---|---|---|
| | **A** | **B** |
| Acrylate terminated telechelic polyacrylate (1) | 53 | 53 |
| Antioxidants (2) | 1.0 | 1.0 |
| Dimethylacrylamide | 17.5 | 17.5 |
| Plasticizer (3) | 10.0 | 10.0 |
| Active fumed silica (4) | 12.75 | 4.25 |
| Traditional fumed silica (5) | 4.25 | 12.75 |
| Photoinitiator (6) | 1.0 | 1.0 |

| | | |
|---|---|---|
| (1) RC220C and XX013C available from Kaneka Corporation (2) Irganox B-215 available from Ciba (3) Plasthall DBEEEG available from the HallStar Company (4) Aerosil R7200 available from Evonik Industries (5) HDK-H2000 available from Wacker Chemical Corporation (6) Irgacure 2022 available from Ciba | | |

Table 2 below shows the results of various tests performed on the gaskets made by Composition A and Composition B, respectively. As can be seen in Table 2, the formulation with higher levels of the active fumed silica compared to traditional fumed silica (Composition A) has a higher tensile modulus, a higher sealing force under compression, and better compression set at 150 C than the formulation with lower levels of active fumed silica compared to traditional fumed silica (Composition B).

**Table 2 -- Test Results**

| **Physical Properties** | **Sample** | |
|---|---|---|
| | **A** | **B** |
| Tensile Modulus at 100% elongation | 422 psi | 246 psi |
| Initial sealing force -Dyneon CSR fixture 25% compression | 82 N | 60 N |
| Compression set 1000 Hr @150C | 52% | 65% |

### Example 2 -- Compositions Including a Plasticizer

In Table 3 below, two samples have been formulated. Composition C is a formulation that includes a plasticizer, while Composition D does not include a plasticizer. The compositions were formed and mold-injected.

**Table 3**

| **Component** | **Sample/Amt. (wt%)** | |
|---|---|---|
| | **C** | **D** |
| Polyacrylate (1) | 53.5 | 69.5 |
| Antioxidants (2) | 1.0 | 1.0 |
| Dimethylacrylamide | 17.5 | 15 |
| Plasticizer (3) | 10.0 | -- |
| Active fumed silica (4) | 8.5 | 13.5 |
| Fumed silica (5) | 8.5 | -- |
| Photoinitiator (6) | 1.0 | 1.0 |

| | | |
|---|---|---|
| (1) RC220C available from Kaneka Corporation (2) Irganox B-215 available from Ciba (3) Plasthall DBEEEG available from HallStar Company (4) Aerosil R7200 available from Evonik Industries (5) HDK-H2000 available from Wacker Chemical Corporation (6) Irgacure 2022 available from Ciba | | |

The formed gaskets were then tested for respective glass transition temperature levels. The results are set forth in Table 4 below.

**Table 4 -- Results of Glass Transition Temperature Test**

| **Physical Property** | **Sample** | |
|---|---|---|
| | **C** | **D** |
| Glass Transition Temperature | -26°C | -11°C |

As can be seen, the composition including the plasticizer (Composition C) has a much lower glass transition temperature than the composition without a plasticizer (Composition D). Composition C has an improved glass transition temperature, which shows an increase in the amount of sealing force that a cured product can retain at extremely low temperatures.

### Example 3 -- Comparative Compositions

Tables 5 and 6 below compare eight different compositions (E-L), encompassing varying amounts of plasticizers and silicas. Compositions E-L were formed and exposed to actinic radiation to test their various properties.

**Table 5 -- Comparative Compositions (E-H)**

| **Component** | **Sample/Amt. (wt%)** | | | |
|---|---|---|---|---|
| | **E** | **F** | **G** | **H** |
| Polyacrylate (1) | 33.125 | 28.875 | 26.75 | 26.75 |
| Polyacrylate (2) | 33.125 | 28.875 | 26.75 | 26.75 |
| Antioxidants (3) | 1 | 1 | 1 | 1 |
| Dimethyl acrylamide | 17.5 | 17.5 | 17.5 | 17.5 |
| Plasticizer (4) | 10 | 10 | 10 | 10 |
| Active fumed silica (5) | -- | -- | -- | 4.25 |
| Fumed silica (6) | 4.25 | 12.75 | 17 | 12.75 |
| Photoinitiator (7) | 1 | 1 | 1 | 1 |

| | | | | |
|---|---|---|---|---|
| (1) RC220C available from Kaneka Corporation (2) XX013C available from Kaneka Corporation (3) Irganox B-215 available from Ciba (4) Plasthall DBEEEG available from the HallStar Company (5) Aerosil R7200 available from Evonik Industries (6) HDK-H2000 available from Wacker Chemical Corporation (7) Irgacure 2022 available from Ciba | | | | |

**Table 6 -- Comparative Compositions (I-L)**

| | **Sample/Amt. (wt%)** | | | |
|---|---|---|---|---|
| **Component** | **I** | **J** | **K** | **L** |
| Polyacrylate (1) | 26.75 | 33.125 | 28.875 | 26.75 |
| Polyacrylate (2) | 26.75 | 33.125 | 28.875 | 26.75 |
| Antioxidants (3) | 1 | 1 | 1 | 1 |
| Dimethyl acrylamide | 17.5 | 17.5 | 17.5 | 17.5 |
| Plasticizer (4) | 10 | 10 | 10 | 10 |
| Active fumed silica (5) | 12.75 | 4.25 | 12.75 | 17 |
| Fumed silica (6) | 4.25 | -- | -- | -- |
| Photoinitiator (7) | 1 | 1 | 1 | 1 |

| | | | | |
|---|---|---|---|---|
| (1) RC220C available from Kaneka Corporation (2) XX013C available from Kaneka Corporation (3) Irganox B-215 available from Ciba (4) Plasthall DBEEEG available from the HallStar Company (5) Aerosil R7200 available from Evonik Industries (6) HDK-H2000 available from Wacker Chemical Corporation (7) Irgacure 2022 available from Ciba | | | | |

The eight comparative compositions were tested for various properties, including durability, tensile strength, modulus, and various compression set tests. The results are summarized in Table 7 below.

**Table 7 -- Properties of Comparative Tests**

| | **Sample** | | | | | | | |
|---|---|---|---|---|---|---|---|---|
| **Physical Properties** | **E** | **F** | **G** | **H** | **I** | **J** | **K** | **L** |
| Durometer (Shore A) | 38 | 46 | 52 | 58 | 62 | 40 | 53 | 60 |
| Tensile (PSI) | 347 | 590 | 738 | 608 | 620 | 350 | 592 | 693 |
| Modulus (100%)(PSI) | 115 | 158 | 212 | 246 | 422 | 131 | 385 | 536 |
| Elongation (% @ break) | 300 | 356 | 364 | 258 | 176 | 235 | 182 | 158 |
| Initial CSR @ 150°C (N) | 30 | 41 | 48 | 62 | 80 | 33 | 67 | 101 |
| % Retained @ 24 hrs @ 150°C | 61 | 47 | 46 | 44 | 42 | 68 | 60 | 52 |
| % Retained @ 70 hrs @ 150°C | 60 | 44 | 46 | 37 | 36 | 61 | 58 | 51 |
| Net force aft 24 hrs @ 150°C (N) | 18.3 | 19.3 | 22.1 | 27.3 | 33.6 | 22.4 | 40.2 | 52.5 |
| Net force aft 70 hrs @ 150°C (N) | 18.0 | 18.0 | 22.0 | 22.9 | 28.8 | 20.1 | 38.9 | 51.4 |
| Initial compression set after 70 hrs at 150 ° C (w/ initial comp of 25%) | 15 | 75 | 24 | 31 | 25 | -4 | 6 | 13 |
| Initial compression set after 70 hrs at 150 ° C (w/ initial comp of 35%) | 16 | 28 | 27 | NA | NA | -4 | 5 | 12 |
| Initial compression set after 70 hrs at 150 ° C (w/ initial comp of 45%) | F | 23 | 29 | NA | NA | F | F | F |

As can be seen, the compositions incorporating at least a portion of active fumed silica generally performed better than those compositions lacking any amount of active fumed silica. In particular, those compositions incorporating higher amounts of active fumed silica (Samples I, K, and L), each displayed considerably better shore durometer values, modulus at 100%, initial sealing force at 150°C, and net sealing force retained at both 24 hours and 70 hours. Further, the compositions including at least a portion of active fumed silica showed superior compression set (at 25% and 35%) properties than those lacking any active fumed silica. "F" indicates failure of the gasket.

### Example 4

In Table 8 below, five samples have been formulated. Compositions M and O contain a combination of two acrylate terminated telechelic polyacrylates of different molecular weights, Composition O contains an additional antioxidant and Composition M contains active fumed silica whereas Composition O contains traditional fumed silica. The compositions were formed and mold-injected.

**Table 8 -- Composition Formulations**

| **Component** | **Sample/Amt. (wt%)** | | | | |
|---|---|---|---|---|---|
| | **M** | **N** | **O** | **P** | **Q** |
| Acrylate terminated telechelic polyacrylate (1a) | 18.8 | -- | 18.5 | -- | -- |
| Acrylate terminated telechelic polyacrylate (1b) | 37.7 | -- | 37.0 | -- | -- |
| Acrylate terminated telechelic polyacrylate (1c) | -- | 55.5 | -- | 55.5 | 58.5 |
| Antioxidant (2a) | 1.0 | 1.0 | 1.0 | 1.0 | 1.0 |
| Antioxidant (2b) | -- | 1.0 | 1.0 | 1.0 | 1.0 |
| Dimethylacrylamide | 17.5 | 17.5 | 17.5 | 17.5 | 17.5 |
| Isobornyl Acrylate | 5.0 | 5.0 | 5.0 | 5.0 | 5.0 |
| Plasticizer (3) | 5.0 | 5.0 | 5.0 | 5.0 | 5.0 |
| Active fumed silica (4) | 14 | 14 | -- | -- | -- |
| Active fumed silica (5) | -- | -- | 14 | 14 | 11 |
| Photoinitiator (6) | 1.0 | 1.0 | 1.0 | 1.0 | 1.0 |

| | | | | | |
|---|---|---|---|---|---|
| (1a) RC100C available from Kaneka Corporation (1b) XX019C available from Kaneka Corporation (1c) XX039C available from Kaneka Corporation (higher molecular weight than XX019C) (2a) Irganox B-215 available from Ciba (2b) Vulkanox ZMB-2/C5 (zinc-4- and 5-methyl-2-mercaptobenzimidazole) available from LANXESS (3) TegMer 809 (PEG 400 Di-2-ethylhexoate) available from the HallStar Company (4) Aerosil R7200 available from Evonik Industries (5) HDK-H30RY available from Wacker Chemical Corporation (6) Irgacure 2022 available from Ciba | | | | | |

The five comparative compositions were tested for various properties, including durability, tensile strength, modulus, and various compression set tests. The results are summarized in Table 9 below.

**Table 9**

| **Physical Properties** | **Sample** | | | | |
|---|---|---|---|---|---|
| | **M** | **N** | **O** | **P** | **Q** |
| Durometer (Shore A) | 56 | 55 | 69 | 68 | 61 |
| Tensile (PSI) | 638 | 759 | 1109 | 1256 | 1063 |
| Modulus (100%)(PSI) | 327 | 366 | 527 | 492 | 351 |
| Elongation (% @ break) | 207 | 233 | 222 | 278 | 293 |
| Initial CSR @ 150°C (N) | 62 | 76 | 104 | 125 | 77 |
| % Retained at 24 hrs at 150°C | 57 | 44 | 44 | 42 | 46 |
| % Retained at 70 hrs at 150°C | 56 | 40 | 42 | 36 | 41 |
| Net force aft 24 hrs @ 150°C (N) | 35.3 | 33.4 | 45.8 | 52.5 | 35.4 |
| Net force aft 70 hrs @ 150 °C (N) | 34.7 | 30.4 | 43.7 | 45 | 31.6 |
| Initial compression set aft 70 hrs @ 150°C (w/ initial comp of 25%) | 9 | 12 | 19 | 18 | 13 |
| Initial compression set aft 70 hrs @ 150°C (w/ initial comp of 35%) | 10 | 12 | 14 | 18 | 11 |
| Initial compression set aft 70 hrs @ 150°C (w/ initial comp of 45%) | 7 | 9 | 13 | 14 | 10 |

As can be seen, Composition O, P and Q (containing the active fumed silica HDK-H30RY) demonstrate an even greater improvement tensile, modulus, elongation and sealing force than Compositions M and N (containing the active fumed silica R7200).

## Claims

1. An actinic radiation curable composition with improved tensile modulus comprising:
a polyacrylate;
(meth)acrylate-functionalized silica;
a photoinitiator; and
a plasticizer

2. The actinic curable composition of claim 1, further comprising an antioxidant.

3. The actinic curable composition of claim 1, further comprising dimethylacrylamide.

4. The actinic curable composition of claim 1, further comprising a hydrophobic fumed silica.

5. The actinic curable composition of claim 4, wherein the ratio of said (meth)acrylate-functionalized silica to said hydrophobic fumed silica is between 3:1 to 1:3.

6. The actinic curable composition of claim 5, wherein the ratio of said active fumed silica to said hydrophobic fumed silica is 2:1.

7. The actinic curable composition of claim 1, wherein said composition maintains an effective sealing force at temperatures as low as -30°C.

8. The actinic curable composition of claim 1, wherein said composition comprises a glass transition temperature by peak tan delta of between -20°C to -30°C.

9. The actinic curable composition of claim 1, wherein said polyacrylate comprises an acrylate terminated telechelic polyacrylate.

10. A method for producing a gasket comprising:
providing an actinic radiation curable composition with improved tensile modulus, said composition comprising:
a polyacrylate;
(meth)acrylate-functionalized silica;
a photoinitiator;and
a plasticizer;
providing an injection mold defining an enclosed gasket-forming cavity and an injection port communicating with the cavity, the mold comprising an actinic radiation conducting means for permitting radiation transmission therethrough;
injecting said composition into the mold to at least partially fill the cavity; and
transmitting actinic radiation through the actinic radiation conducting means in a sufficient amount to cure the composition in the mold to form a gasket in the gasket-forming cavity.

11. The method of claim 10, wherein said actinic curable composition further comprises a hydrophobic fumed silica.

12. The method of claim 11, wherein the ratio of said (meth)acrylate-functionalized silica to said hydrophobic fumed silica is between 3:1 to 1:3.

13. The method of claim 10, wherein said step of injecting said composition into the mold to fill the cavity is performed at approximately room temperature.

14. The method of claim 10, wherein said actinic radiation conducting means comprises radiation-conducting channels which conduct radiation through the mold to the actinic radiation curable composition.

## Patentansprüche

1. Durch aktinische Strahlung härtbare Zusammensetzung mit verbessertem Zugmodul, die Folgendes umfasst:
ein Polyacrylat;
(meth)acrylatfunktionalisiertes Siliziumdioxid;
einen Photoinitiator und
einen Weichmacher.

2. Aktinisch härtbare Zuaammensetzung nach Anspruch 1, die weiterhin ein Antioxidationsmittel umfaßt.

3. Aktinisch härtbare Zusammensetzung nach Anspruch 1, die weiterhin Dimethylacrylamid umfasst.

4. Aktinisch härtbare Zusammensetzung nach Anspruch 1, die weiterhin einen hydrophoben pyrogene Kieselsäure umfasst.

5. Aktinisch härtbare Zuaammensetzung nach Anspruch 4, wobei das Verhältnis des (meth)acrylatfunktionalisierten Siliciumdioxids zu dem hydrophoben pyrogene Kieselsäure zwischen 3:1 und 1:3 liegt.

6. Aktinisch härtbare Zusammensetzung nach Anspruch 5, wobei das Verhältnis der aktiven pyrogene Kieselsäures zu dem hydrophoben pyrogene Kieselsäure 2:1 beträgt.

7. Aktinisch härtbare Zusammensetzung nach Anspruch 1, wobei die Zusammensetzung bei Temperaturen von bis zu -30 °C eine wirksame Dichtkraft aufrechterhält,

8. Aktinisch härtbare Zusammensetzung nach Anspruch 1, wobei die Zusammensetzung eine Glasübergangstemperatur bei einem tan-delta-Peak zwischen -20 °C und -30 °C umfasst.

9. Aktinisch härtbare Zusammensetzung nach Anspruch 1, wobei das Polyacrylat sein acrylatterminiertes telecheles Polyacrylat umfasst.

10. Verfahren zur Herstellung einer Dichtung, das Folgendes umfasst:
Bereitstellen einer durch aktinische Strahlung härtbaren Zusammensetzung mit verbessertem Zugmodul, wobei die Zusammensetzung Folgendes umfasst:
ein Polyacrylat;
(meth)acrylatfunktionalisiertes Siliziumdioxid;
einen Photoinitiator und
einen Weichmacher;
Bereitstellen eines Spritzgießwerkzeugs, das sein geschlossenes, eine Dichtung formendes Gesenk und ein Einspritzventil, das mit dem Gesenk in Vebindung steht, abgrenzt, wobei das Werkzeug ein aktinische Strahlung leitendes Mittel zum Ermöglicher von Strahlungsübertragung dort hindurch umfasst;
Einspritzein der Zusammensetzung in das Werkzeug, um das Gesenk zumindest zum Teil zu füllen; und
Übertragen aktinischen Strahlung durch das aktinische Strahlung leitende Mittel in einer ausreichenden Menge, um die Zusammensetzung im Werkzeug zu härten, um eine Wichtung in dem eine Dichtung formenden Gesenk zu formen.

11. Verfahren nach Anspruch 10, wobei die aktinisch härtbare Zusammensetzung weiterhin eine hydrophobe pyrogene Kieselsäure umfasst.

12. Verfahren nach Anspruch 11, wobei das Verhältnis des (meth)acrylatfunktionalisierten Siliciumdioxids zu dem hydrophoben pyrogene Kieselsäure zwischen 3:1 und 1:3 liegt.

13. Verfahren nach Anspruch 10, wobei der Schritt des Einspritzens der Zusammensetzung in das Werkzeug, um das Gesenk zu füllen, bei ungefähr Raumtemperatur durchgeführt wird.

14. Verfahren nach Anspruch 10, wobei das aktinische Strahlung leitende Mittel strahlungsleitende Kanäle umfasst, die Strahlung durch das Werkzeug zu der durch aktinische Strahlung härtbaren Zusammensetzung leiten.

## Revendications

1. Composition durcissable par exposition à un rayonnement actinique, manifestant un module d'élasticité en fraction amélioré, comprenant :
un polyacrylate ;
de la silice fonctionnalisée avec un groupe (méth)acrylate ;
un photoinitiateur ; et
un plastifiant.

2. Composition durcissable par exposition à un rayonnement actinique selon la revendication 1, comprenant en outre un antioxydant.

3. Composition durcissable par exposition à un rayonnement actinique selon la revendication 1, comprenant en outre du diméthylacrylamide.

4. Composition durcissable par exposition à un rayonnement actinique selon la revendication 1, comprenant en outre une silice pyrogénée hydrophobe.

5. Composition durcissable par exposition à un rayonnement actinique selon la revendication 4, dans laquelle le rapport de ladite silice fonctionnalisée avec un groupe (méth)acrylate à ladite silice pyrogénée hydrophobe se situe entre 3:1 et 1:3.

6. Composition durcissable par exposition à un rayonnement actinique selon la revendication 5, dans laquelle le rapport de ladite silice pyrogénée active à ladite silice pyrogénée hydrophobe s'élève à 2:1.

7. Composition durcissable par exposition à un rayonnement actinique selon la revendication 1, dans laquelle ladite composition maintient une force d'étanchéité efficace à des températures allant jusqu'à -30 °C.

8. Composition durcissable par exposition à un rayonnement actinique selon la revendication 1, dans laquelle ladite composition comprend une température de transition vitreuse à la tan delta maximale entre -20 °C et -30 °C.

9. Composition durcissable par exposition à un rayonnement actinique selon la revendication 1, dans laquelle ledit polyacrylate comprend un polyacrylate téléchèle à terminaison acrylate.

10. Procédé pour la production d'un joint d'étanchéité comprenant le fait de :
procureur une composition durcissable par exposition à un rayonnement actinique manifestant un module d'élasticité en traction amélioré, ladite composition comprenant :
un polyacrylate ;
de la silice fonctionnalisée avec un groupe (méth)acrylate ;
un photoinitiateur ; et
un plastifiant ;
procurer un moule pour le moulage par injection définissant une cavité renfermée de formation d'un joint d'étanchéité et un orifice d'injection communiquant avec la cavité, le moule comprenant un moyen de conduction d'un rayonnement actinique permettant de guider la transmission du rayonnement à travers lui ;
injecter ladite composition dans le moule jusqu'à remplir au moins partiellement la cavité et
transmettre le rayonnement actinique via le moyen de conduction du rayonnement actinique en une quantité suffîsante pour durcir la composition dans le moule afin d'obtenir un joint d'étanchéité dans la cavité de formation du joint d'étanchéité.

11. Procécé selon la revendication 10, dans lequel ladite composition durcissable par exposition à un rayonnement actinique comprend en outre une silice pyrogénée hydrophobe.

12. Procédé selon la revendication 11, dans lequel le rapport de ladite silice fonctionnalisée avec un groupe (méth)acrylate à ladite silice pyrogénée hydrophobe se situe entre 3:1 et 1:3.

13. Procédé selon la revendication 10, dans lequel ladite étape d'injection de ladite composition dans le moule pour remplir la cavité est mise en oeuvre approximativement à la température ambiante.

14. Procédé selon la revendication 10, dans lequel le moyen de conduction du rayonnement actinique comprend des canaux de conduction du rayonnement qui conduisent le rayonnement à travers le moule en direction de la composition durcissable par exposition à un rayonnement actinique.
